# EUROPÄISCHE PATENTANMELDUNG

(11) **EP 1 662 247 A1**
(43) Veröffentlichungstag der Anmeldung: **31.05.2006**
(21) Anmeldenummer: 05025218.8
(22) Anmeldetag: 18.11.2005
(51) Int. Cl.: G01N 15/14, A01C 1/00, A01F 12/50, A01D 91/00, A01F 25/00

(54) **Verfahren zur Bestimmung der Partikelform und/oder Grösse von landwirtschaftlichen Gutpartikeln**

(30) Priorität: 24.11.2004 DE 102004056520
(71) Anmelder: Amazonen-Werke H. Dreyer GmbH & Co. KG, 49205 Hasbergen (DE)
(72) Erfinder: Scheufler, Bernd, Dr., 49205 Hasbergen (DE); Marquering, Johannes, Dr., 49176 Bergloh (DE)

(57) **Zusammenfassung**

Verfahren zur Bestimmung der Partikelform und/oder Größe von landwirtschaftlichen Gutpartikeln wie Saatkörner, Düngerkörner, Spritzbrühetropfen, Getreidekörner, Getreidestroh, etc, durch eine zeilenweise optoelektronische Abtastung eines Partikelstroms, bei dem der Partikelstrom in einem transparenten Medium durch Schwerkraft oder zusätzliche Kräfte an einer optoelektrischen Messstrecke senkrecht zu parallelen Lichtstrahlen vorbeibewegt wird, und bei dem die Signale der abgedeckten und nicht abgedeckten Elemente der jeweiligen CCD-Zeile in einer elektronischen Auswerteeinheit ausgewertet und in einem Speichermedium gespeichert werden und zwar in zeitlicher Reihenfolge hintereinander, so dass ein zeitlich ablaufender Videofilm über die die Messstrecke passierenden Gutpartikel entsteht.

## Beschreibung

Die Erfindung betrifft ein Verfahren zur Bestimmung der Partikelform und/oder Größe von landwirtschaftlichen' Gutpartikeln, wie Saatkörner etc..

In der EP 01 66 136 A2 ist ein Verfahren und eine Vorrichtung zum optischen Zählen feiner Körperchen beschrieben. Bei diesem Verfahren werden die Gutpartikel, hier Saatkörner durch Schwerkraft an einer optoelektrischen Messtrecke senkrecht zu parallelen Strahlen vorbeibewegt. Hierdurch können die Anzahl der durch die Messstrecke bewegten Gutpartikel gezählt werden. Es ist hier nicht möglich, die Partikelform oder Größe der Gutpartikel zu ermitteln.

Der Erfindung liegt die Aufgabe zugrunde, mittels optoelektronischem Abtasten die Anzahl, Partikelform und/oder Größe von landwirtschaftlichen Gutpartikeln zu bestimmen, um hieraus Einstellparameter für landwirtschaftliche Maschinen abzuleiten.

Diese Aufgabe wird erfindungsgemäß durch die Merkmale des Patentanspruches 1 gelöst. Infolge dieser Maßnahme kann in einfacher Weise die Partikelform oder -größe von landwirtschaftlichen Gutpartikeln, wie Saatkörner, Düngerkörner, Spritzenbrühe, Tropfen, Getreidekörner, Getreidestroh etc. bestimmt werden. Über diese Parameter kann auf verschiedene Einstellparameter von landwirtschaftlichen Maschine geschlossen werden.

Ein einfacher Aufbau der optoelektronische Messstrecke ergibt sich dadurch, dass die optoelektronische Messstrecke aus zwei um 90° zueinander versetzten Laser-/ CCD-Zeilen besteht.

Die Anzahl der ausgebrachten Gutpartikel lässt sich in einfacher und genauer Weise dadurch ermitteln, dass aus den abgespeicherten Videosequenzen mittels Algorithmen die Anzahl der die Messstrecke passierenden Gutpartikel pro Zeit- und/oder Wegeinheit ermittelt bzw. berechnet werden. Aufgrund der von der elektronischen Mess- und Auswerteeinrichtung ermittelten Anzahl von Gutpartikeln können die der Dosiereinrichtung zugeordneten Einstellelemente angesteuert werden, so dass die gewünschte Anzahl pro Gutpartikel von der Sämaschine ausgebracht werden.

Wird in erfindungsgemäße Messstrecke beispielsweise bei einem Mähdrescher eingesetzt, lässt sich die geerntete Menge Körner sowie der im ausgedroschenen Stroh verbleibende Anteil Körner ermitteln.

Um mit jeweils einer einzigen CCD-Zeile die Gutpartikel abtasten zu können, ist vorgesehen, dass aus den abgespeicherten Videosequenzen mittels Algorithmen der Bildverarbeitung verschiedene Parameter der Gutpartikel wie Partikeldurchmesser, Partikelform, Partikellänge, Kompaktheit, etc. berechnet werden.

In einer Ausgestaltung des Verfahrens ist vorgesehen, dass bei dem Einsatz dieses Verfahrens bei einer Einzelkornsämaschine aufgrund der ermittelten Parameter durch einen Vergleich mit in einem Speichermedium hinterlegten Parameter auf die Abstreifereinstellung des Abstreifers der Vereinzelungseinrichtung der Einzelkornsämaschine geschlossen wird. Infolge dieser Maßnahme kann in einfacher Weise bei dem Einsatz einer Einzelkornsämaschine der Abstreifer der Einzelkornsämaschine zur Einreichung einer optimalen Vereinzelungsqualität entsprechend der Partikelform und der Größe der Partikel eingestellt werden.

Bei einer weiteren Ausgestaltung des Verfahrens bei einem Düngerstreuer ist vorgesehen, dass bei dem Einsatz dieses Verfahrens bei einem Düngerstreuer, insbesondere Mineraldüngerstreuer aufgrund der Kornformanalyse im Vergleich mit in einem Speichermedium hinterlegten Parametern auf das Flug- und Reibverhalten der Düngerkörner in der Luft und/oder auf der Schleuderscheibe und/oder in der Wurfschaufel geschlossen wird. Infolge dieser Maßnahmen kann der Düngerstreuer entsprechend eingestellt werden

Bei einer anderen Ausgestaltung des Verfahrens bei einer Feldspritze ist vorgesehen, dass bei dem Einsatz des Verfahrens bei einer Feldspritze das Tropfenspektrum der durch eine Düse erzeugten Tropfen der Spritzbrühe anhand in einem Speichermedium hinterlegten Tropfenspektren auf die Arbeitsqualität während der Ausbringarbeit geschlossen wird. Hierdurch lässt sich entsprechend den Gegebenheiten das gewünschte Tropfenspektrum einstellen.

Weiterhin lässt sich das erfindungsgemäße Verfahren bei einem Mähdrescher einsetzen, wobei vorgesehen ist, dass bei dem Einsatz des Verfahrens bei einem Mähdrescher aufgrund der Kornform des geernteten Getreides aufgrund in einem Speichermedium hinterlegter Parameter auf die erforderliche Dreschtrommeldrehzahl und die Intensität des Reinigungswindes geschlossen und entsprechende Einstellungen vorgenommen werden. Hierbei kann bei einem Mähdrescher noch eine weitere Verbesserung dadurch erreicht werden, dass mittels des Verfahrens das gedroschene Stroh nach sich noch im Stroh befindliche Korn- und Nichtkornbestandteilen sortierend ermittelt wird und entsprechend des Kornanteiles auf der Verlustanzeigeeinrichtung der Kornanteil im gedroschenen Stroh angezeigt wird.

Weiterhin lässt sich das erfindungsgemäße Verfahren bei einem Feldhäcksler einsetzen, wobei vorgesehen ist, dass beim Einsatz des Verfahrens bei einem Feldhäcksler die Schnittlänge des gehäckselten Getreides und/oder die Beschädigung der Körner anhand in einem Speichermedium hinterlegter Parameter ermittelt werden und so eine Optimierung der Einstellung der Häckseltrommel vornehmbar ist.

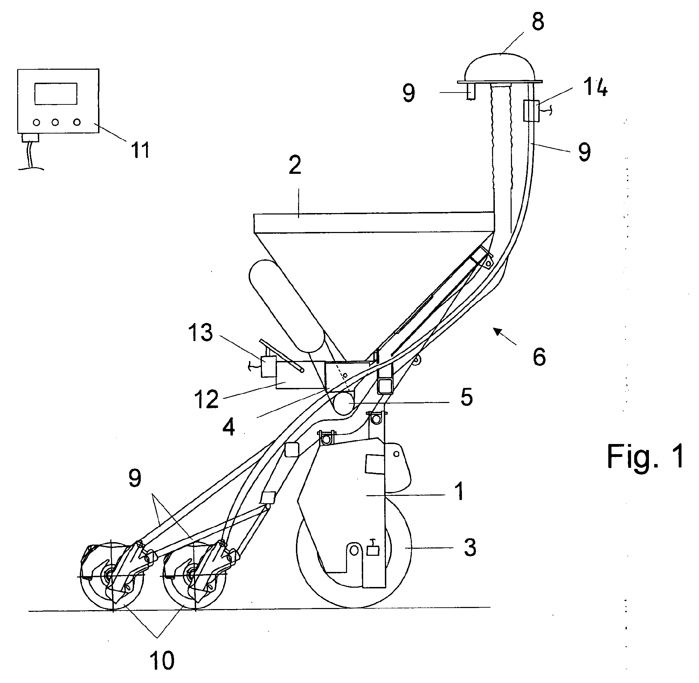

Weitere Einzelheiten der Erfindung sind den übrigen Unteransprüchen, der Beispielsbeschreibung und den Zeichnungen zu entnehmen. Hierbei zeigen
- Fig. 1: eine erfindungsgemäß ausgestattete Sämaschine in Prinzipdarstellung,

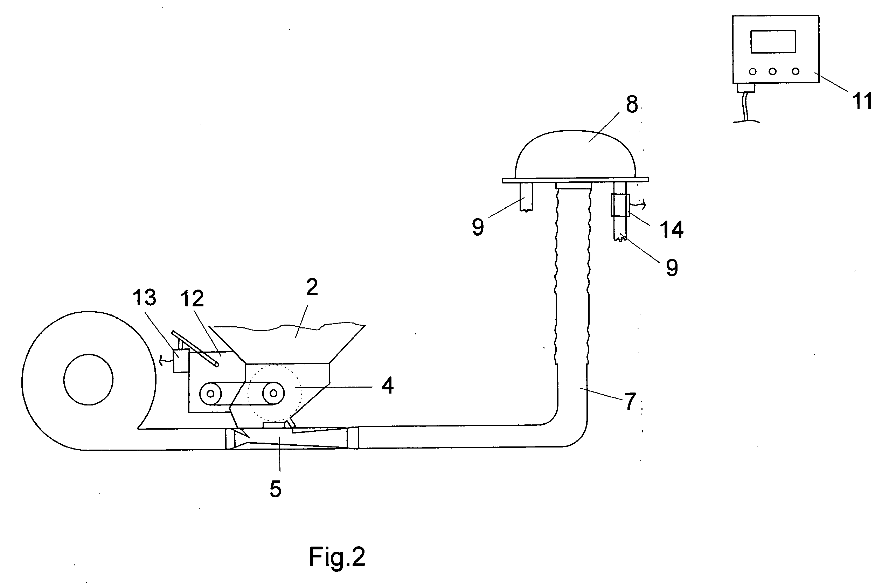

- Fig. 2: die Anordnung der Sensoren in dem Verteilersystem der Sämaschine in vergrößerter Darstellung und in Prinzipdarstellung,
- Fig. 3: den Sensor in Draufsicht in Prinzipdarstellung,
- Fig. 4: der sich aus den Sensordaten ergebene Abdeckungsgrad in Art eines Videofilms von der Zeile 1 und
- Fig. 5: der sich aus den Sensordaten ergebene Abdeckungsgrad in Art eines Videofilms von der Zeile 2.

Die Sämaschine ist als pneumatische Verteilmaschine ausgebildet. Sie weist einen Rahmen 1 und Vorratsbehälter 2 auf. Der Rahmen 1 stützt sich auf Laufrädern oder einer Bodenwalze 3 auf dem Boden ab. Dem Vorratsbehälter 2 ist ein Zentraldosierer 4 zugeordnet, der das sich im Vorratsbehälter 2 befindliche Saatgut über eine Schleuse 5 in eine zentrale Zuführleitung 6, die ein Steigrohr 7 aufweist, einleitet. Dieses Steigrohr 7 mündet an seinem oberen Ende in einem Verteilerkopf 8, über den das dosierte Saatgut auf die einzelnen sich an dem Verteilerkopf 8 anschließenden Saatleitungen 9 aufgeteilt wird. Die Saatleitungen 9 führen zu den am Rahmen 1 angelenkten Säschare 10. Dem Laufrad bzw. der Bodenwalze 3 ist eine Wegstreckenmesseinrichtung zugeordnet, die Messdaten werden an eine als Bordcomputer 11 ausgebildete elektronische Auswerteeinheit übermittelt. Der Dosierer 4 wird über einen Antriebsstrang und ein einstellbares Getriebe 12 von einer Kraftquelle 3 angetrieben. Das Getriebe 12 wird über einen Einstellmotor 13 eingestellt und von dem Bordcomputer 11 angesteuert. Es ist auch möglich den Dosierer 4 direkt von einem in seiner Drehzahl regelbaren Antriebsmotor anzutreiben.

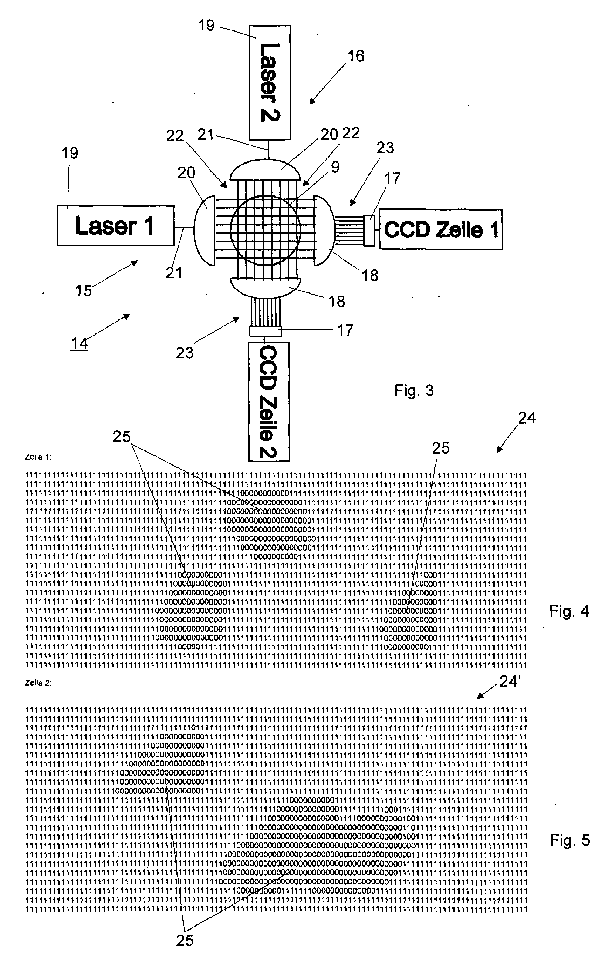

In zumindest einer der von dem Verteilerkopf abgehenden von den Säscharen führenden Saatleitung 9 ist ein als optoelektrische Messstrecke ausgebildete Sensor 14 angeordnet. Der Sensor 14 ist im Bereich eines transparenten Mediums der Saatleitung angeordnet. Der Sensor 9 besteht aus zwei um 90° zueinander versetzt angeordneten Laser-/CCD-Zeilen 15, 16, wie Fig. 3 zeigt. Jede CCD-Zeile 17 weist 256 Pixel auf. Jeder CCD-Zeile 17 ist eine optische Linse 18 zugeordnet. Jeder CCD-Zeile 17 ist jeweils eine parallele Lichtstrahlen erzeugend Lasereinheit 19 mit einer optischen Linse 20 zugeordnet. Der Laserlichtstrahl 21 wird durch die Linse 20 über die Breite des Saatleitungsrohres 9 in parallel zueinander verlaufende Lichtstrahlen 22 aufgefächert, wie Fig. 3 zeigt. Über die der CCD-Zeile 17 zugeordneten Linse 18 werden diese parallelen Strahlen 22 zusammengefasst und in parallelen Strahlen 23 auf die CCD-Zeile 17 geleitet. Die CCD-Zeilen 17 sind mit einer, beispielsweise als Bordcomputer 11 ausgebildeten elektronischen Auswerteeinheit verbunden.

In der elektronischen Auswerteeinheit 11 werden die Signale der abgedeckten und nicht abgedeckten Elemente der jeweiligen CCD-Zeile 17 ausgewertet und in einem Speichermedium gespeichert und zwar in zeitlicher Reihenfolge hintereinander, so dass ein zeitlich ablaufender Videofilm 24, 24' über die die Messstrecke passierenden Gutpartikel entsteht, wie die Fig. 4 und 5 zeigen. Die Saatkörner 25 werden im Ausführungsbeispiel durch pneumatische Förderluft an dem Sensor 14 senkrecht zu den parallelen Lichtstrahlen 22 vorbeibewegt. Aus den abgespeicherten Videofrequenzen werden mittels Algorithmen der Bildverarbeitung verschiedene Parameter der Gutpartikel, wie Partikeldurchmesser, Partikelform, Partikellänge, Kompaktteil, etc. berechnet.

Weiterhin lassen sich aus den Videosequenzen bzw. den Signalen der CCD-Zeilen 17 von der elektronischen Auswerteeinrichtung 11 die Anzahl der Gutpartikel pro Zeit- bzw. Weg- oder Flächeneinheit berechnen.

Diese ermittelten Parameter werden mit in dem Speichermedium des Bordcomputers 11 unterlegten Werten verglichen und hieraus lassen sich Einstellparameter für die Maschine ableiten.

Wenn der vorbeschriebene Sensor, der in Fig. 3 gezeigt ist, bei einer nicht dargestellten Einzelkornsämaschine eingesetzt wird, wird aufgrund der ermittelten Parameter durch einem Vergleich mit in einem Speichermedium der als Bordcomputer ausgeführten elektronischen Auswerteeinheit hinterlegten Parameter auf die Abstreiferstellung des Abstreifers der Vereinzelungseinrichtung der Einzelkornsämaschine geschlossen. Der Bordcomputer kann dann den dem Abstreifer zugeordneten Einstellmotor ansteuern und den Abstreifer entsprechend der ermittelten Parameter einstellen.

Bei einem Schleuderdüngerstreuer ist der Sensor derart in dem abgeworfenen Düngerfächer angeordnet, dass ein Teil der Gutpartikel des Düngerfächers die Messstrecke des Sensors passiert in nicht dargestellter Weise. Der Sensor wird in Abständen in den Düngerstrom mittels geeigneter Mittel eingeschwenkt, um eine Messung durchzuführen. Nach der Messung wird der Sensor aus dem Düngerstrom geschwenkt. Aufgrund der von der elektronischen Auswerteeinrichtung des Sensors durchgeführten Kornformanalyse im Vergleich mit in einem Speichermedium hinterlegten Parametern wird auf das Flug- und Reibverhalten der Düngerkörner in der Luft und/oder auf der Schleuderscheibe und/oder in der Wurfschaufel geschlossen. Aufgrund der ermittelten Parameter kann dann der Düngerstreuer entsprechend eingestellt werden. Hierzu wird dann je nach Ausgestaltung des Düngerstreuers der Aufgabepunkt, die Schaufeleinstellung etc. eingestellt.

Weiterhin kann in einem separaten Versuch vor dem Ausbringen des Düngers mit einem Testgerät, welches den Sensor mit der optoelektonischen Messstrecke des erfindungsgemäßen Verfahrens aufweist, eine kleine Menge des auszubringenden Düngers durch die Messstrecke des Testgerätes geleitet werden, damit die gewünschten Parameter ermittelt werden können. Hierzu ist das Testgerät selbst mit einer elektronischen Auswerteeinheit ausgestattet oder es wird mit dem Bordcomputer, welcher ein entsprechendes Auswerteprogramm aufweist, verbunden.

Wenn der erfindungsgemäße Sensor in nicht dargestellter Weise bei einer Feldspritze eingesetzt wird, lässt sich das Tropfenspektrum der durch eine Düse erzeugten Tropfen der Spritzbrühe ermitteln. Hierzu ist der Sensor derart an der Düse angeordnet, dass der Sprühfächer den Sensor passiert. Es wird dann anhand der ermittelten Daten in einem Speichermedium hinterlegten Tropfenspektrum auf die Arbeitsqualität während der Ausbringarbeit geschlossen.

Weiterhin lässt sich in nicht dargestellter Weise der erfindungsgemäße Sensor bei einem Mähdrescher einsetzten. Der Sensor ist an geeigneter Stelle des Mähdreschers anzuordnen, in welchem der Körnerfluss oder ein Teilstrom des Körnerflusses durch die Messstrecke des Sensors geführt werden kann. Aufgrund der Kornform des geernteten Getreides wird aufgrund in einem Speichermedium hinterlegter Parameter auf die erforderliche Dreschtrommeldrehzahl und die Intensität des Reinigungswindes geschlossen. Es können dann entsprechende Einstellung von Hand oder in automatischer Weise vorgenommen werden. Des weiteren kann der Sensor auch in dem Bereich des Strohauslasses des Mähdreschers angeordnet werden. Hier kann mittels des Verfahrens das gedroschene Stroh nach sich noch im Stroh befindlichen Korn- und Nichtkornbestandteilen sortierend ermittelt werden und entsprechend des Kornanteiles wird auf der Verlustanzeigeeinrichtung der Kornanteil im gedroschenen Stroh angezeigt. Entsprechende Einstellungen können dann erforderlichenfalls vorgenommen werden.

Wenn der erfindungsgemäße Sensor in nicht dargestellter Weise bei einem Feldhäcksler eingesetzt wird, lässt sich die Schnittlänge des gehäckselten Getreides und/oder die Beschädigung der Körner anhand der in einem Speichermedium hinterlegter Parameter ermitteln. Es kann so eine Optimierung der Einstellung der Häckseltrommel vorgenommen werden.

## Patentansprüche

1. Verfahren zur Bestimmung der Anzahl und/oder der Anzahl und/oder der Partikelform und/oder Größe von landwirtschaftlichen Gutpartikeln wie Saatkörner, Düngerkörner, Spritzbrühetropfen, Getreidekörner, Getreidestroh, etc, durch eine zeilenweise optoelektronische Abtastung eines Partikelstroms, bei dem der Partikelstrom in einem transparenten Medium durch Schwerkraft oder zusätzliche Kräfte an einer optoelektrischen Messstrecke (15,16) senkrecht zu parallelen Lichtstrahlen vorbeibewegt wird, und bei dem die Signale der abgedeckten und nicht abgedeckten Elemente der jeweiligen CCD-Zeile (17) in einer elektronischen Auswerteeinheit (11) ausgewertet und in einem Speichermedium gespeichert werden und zwar in zeitlicher Reihenfolge hintereinander, so dass ein zeitlich ablaufender Videofilm (24,24') über die die Messstrecke (15,16) passierenden Gutpartikel (25) entsteht.

2. Verfahren nach Anspruch 1, **dadurch gekennzeichnet, dass** die optoelektronische Messstrecke (15,16) aus zwei um 90° zueinander versetzten Laser-/CCD-Zeilen (15,16) besteht.

3. Verfahren nach Anspruch 1, **dadurch gekennzeichnet, dass** aus den abgespeicherten Videosequenzen (24,24') mittels Algorithmen die Anzahl der die Messstrecke passierenden Gutpartikel pro Zeit- und/oder Wegeinheit ermittelt bzw. berechnet werden.

4. Verfahren nach Anspruch 1, **dadurch gekennzeichnet, dass** aus den abgespeicherten Videosequenzen (24, 24') mittels Algorithmen der Bildverarbeitung verschiedene Parameter der Gutpartikel, wie Partikeldurchmesser, Partikelform, Partikellänge, Kompaktheit, etc. berechnet werden.

5. Verfahren nach Anspruch 4, **dadurch gekennzeichnet, dass** bei dem Einsatz dieses Verfahrens bei einer Einzelkornsämaschine aufgrund der ermittelten Parameter durch einen Vergleich mit in einem Speichermedium hinterlegten Parameter auf die Abstreifereinstellung des Abstreifers der Vereinzelungseinrichtung der Einzelkornsämaschine geschlossen wird.

6. Verfahren nach einem oder mehreren der Ansprüche 1 bis 4, **dadurch gekennzeichnet, dass** bei dem Einsatz dieses Verfahrens bei einem Düngerstreuer, insbesondere Mineraldüngerstreuer aufgrund der Kornformanalyse im Vergleich mit in einem Speichermedium hinterlegten Parametern auf das Flug- und Reibverhalten der Düngerkörner in der Luft geschlossen wird.

7. Verfahren nach einem oder mehreren der Ansprüche 1 bis 4, **dadurch gekennzeichnet, dass** bei dem Einsatz des Verfahrens bei einer Feldspritze das Tropfenspektrum der durch eine Düse erzeugten Tropfen der Spritzbrühe anhand in einem Speichermedium hinterlegten Tropfenspektren auf die Arbeitsqualität während der Ausbringarbeit geschlossen wird.

8. Verfahren nach einem oder mehreren der Ansprüche 1 bis 4, **dadurch gekennzeichnet, dass** bei dem Einsatz des Verfahrens bei einem Mähdrescher aufgrund der Kornform des geernteten Getreides aufgrund in einem Speichermedium hinterlegter Parameter auf die erforderliche Dreschtrommeldrehzahl und die Intensität des Reinigungswindes geschlossen und entsprechende Einstellungen vorgenommen werden.

9. Verfahren nach Anspruch 8, **dadurch gekennzeichnet, dass** mittels des Verfahrens das gedroschene Stroh nach sich noch im Stroh befindliche Korn- und Nichtkornbestandteilen sortierend ermittelt wird und entsprechend.des Kornanteiles auf der Verlustanzeigeeinrichtung der Kornanteil im gedroschenen Stroh angezeigt wird.

10. Verfahren nach einem oder mehreren der Ansprüche 1 bis 4, **dadurch gekennzeichnet, dass** beim Einsatz des Verfahrens bei einem Feldhäcksler die Schnittlänge des gehäckselten Getreides und/oder die Beschädigung der Körner anhand in einem Speichermedium hinterlegter Parameter ermittelt werden und so eine Optimierung der Einstellung der Häckseltrommel vornehmbar ist.
